Europäisches Patentamt

European Patent Office

Office européen des brevets

(11) Publication number: **0 085 445**
**B1**

(12) **EUROPEAN PATENT SPECIFICATION**

(45) Date of publication of patent specification: **20.05.87**

(21) Application number: **83200028.5**

(22) Date of filing: **10.01.83**

(51) Int. Cl.⁴: **B 01 F 3/04,** B 01 D 53/34, B 01 D 53/14, B 01 D 47/06

(54) Process for contacting a gas with atomized liquid.

(30) Priority: **29.01.82 US 344102**
**15.11.82 GB 8232534**

(43) Date of publication of application:
**10.08.83 Bulletin 83/32**

(45) Publication of the grant of the patent:
**20.05.87 Bulletin 87/21**

(84) Designated Contracting States:
**BE CH DE FR GB IT LI NL SE**

(56) References cited:
**EP-A-0 044 697**
**EP-A-0 058 437**
**GB-A-1 253 875**
**US-A-3 245 622**

(73) Proprietor: **SHELL INTERNATIONALE RESEARCH MAATSCHAPPIJ B.V.**
**Carel van Bylandtlaan 30**
**NL-2596 HR Den Haag (NL)**

(72) Inventor: **Son, Jaime Santos**
**10210 Meadow Lake**
**Houston Texas 77042 (US)**
Inventor: **Johnston, Stephen Wayne**
**2023 Mustang Spring Drive**
**Missouri City Texas 77459 (US)**
Inventor: **Hasenack, Hendrikus Johannes A.**
**3 Badhuisweg**
**NL-1031 CM Amsterdam (NL)**

(74) Representative: **Aalbers, Onno et al**
**P.O. Box 302**
**NL-2501 CH The Hague (NL)**

Courier Press, Leamington Spa, England.

**Description**

The invention relates to a process for contacting a gas with atomized liquid, which process employs an internal mix-type fluid atomizing nozzle assembly, hereinafter called "internal mix atomizer".

Atomizers can be subdivided into pressure atomizers, wherein liquid sprays are formed by passing liquid at high pressure through relatively small nozzle openings and the internal mix atomizers mentioned hereinbefore. Internal mix atomizers have the advantage over pressure atomizers that better atomization rates can be attained, in combination with a good control of droplet size.

In the process to which the invention relates, liquid is supplied along with an atomizing gas under pressure to a mixing chamber of an internal mix atomizer, having a plurality of exit ports communicating through hollow passages with the mixing chamber. The liquid leaves the atomizer via said exit ports and enters in the form of expanding spray jets into a confined space containing a gaseous stream to be contacted with said spray jets.

Atomizers are suitably used in a large variety of industrial processes, such as processes for combusting heavy liquid fuels, spray drying processes, processes for incinerating liquid waste streams, wet cleaning processes for removing soluble gaseous components or solid dust particles from a gaseous stream, and processes for quenching hot gaseous streams.

In order to obtain an efficient gas-liquid contact it is essential that the sprays of liquid leaving the atomization ports do not collapse. Sprays may collapse if, for example, the distance between two neighbouring atomization ports is too small, so that the expanded liquid sprays can get too close together. An internal mix atomizer known from European patent application No. 0058437 is so formed that it is particularly suited for elimination of spray collapse of the type above described. This known mix atomizer has its exit ports so positioned that the ratio

$$\frac{r_i(o) + r_j(o)}{t_{ij}}$$

in which $r_i(o)$ and $r_j(o)$ are jet radii directly after expansion of the liquid sprays from exit ports i and j, respectively, and $t_{ij}$ is the distance between the centre of exit port i and the centre of exit port j, is less than 0.8.

The above type of collapse phenomenon is to be distinguished from collapse of the spray jets at larger distances downstream from the mix atomizer. This latter type of spray collapse can be caused by the exit ports geometry and/or by external conditions, such as gas flowing along the atomizer, thereby pushing the jet sprays towards each other, so that the sprays tend to merge into a single jet.

Apart from spray collapse, there is another phenomenon which can cause problems in spray contacting processes, viz. that of impingement of liquid on the confinement wall of the mixing chamber, in which gas is contacted with jet sprays. Depending on the type of spray contacting process and the fluids being used, impingement of liquid on the mixing chamber wall might result in damage of the process equipment due to for example erosion, blockage of the process lines due to deposits on the walls and/or reduction of the process efficiency.

The object of the present invention is to provide a process for contacting a gas with atomized liquid employing an internal mix atomizer, in which process the above-mentioned risks of spray collapse and liquid impingement have been substantially eliminated.

Accordingly, the invention provides a process for contacting a gas with atomized liquid, which process comprises injecting droplets of liquid into a contact chamber with a confinement wall and containing said gas, through an internal mix atomizer assembly comprising a member having an internal mixing chamber adapted to receive a liquid and an atomizing gas supply and having a plurality of interior passages each communicating, at one end thereof, with the internal mixing chamber, and each terminating at the other end thereof, as an exit port in the surface of the member, wherein the angle of said passages to the axis of said atomizer assembly is between 30° and 75°, the weight ratio of liquid to atomizing gas is between 1:1 and 7:1, and the Sauter mean drop diameter of the droplets entering said contact chamber at said exit ports is not more than 200 μm.

Preferably, said passages are located in the atomizer so that the exit ports are positioned in relation to each other in such a manner that for each pair of adjacent exit ports the ratio

$$\frac{r_i(o) + r_j(o)}{t_{ij}},$$

wherein $r_i(o)$ and $r_j(o)$ are the jet radii directly after expansion of exit ports i and j, respectively, and $t_{ij}$ is the distance between the centre of exit port i and the centre of exit port j, is less than 0.8, in which assembly the ratio

$$N/\sin \alpha,$$

in which N is the number of exit ports of the assembly and α is the angle of the internal passages and exit ports to the axis of the assembly, is not more than 15.6, and the ratio

$$x_i/R,$$

in which $x_i$ is the downstream distance between an exit port i and the location at which the spray from said exit port impinges to the confinement wall when one exit port is used and R is the radius of the confinement wall, is in the range of from 2.75 to 5.65.

The present invention has a number of important aspects. Initially, a significant difference between this invention and the prior art is that the nozzles employed in the prior art were often pressure nozzles, and there was poor atomization of the liquid. These pressurized nozzles did not give good control of droplet size. However, in the present invention, the atomizing gas (e.g., steam) is at high pressure and adds a lot of energy to the system. Accordingly, it is now possible to obtain better control of droplet size. Droplet size is important because the greater the droplet size, the longer time (and hence larger contact chamber) is required for exchange of heat or matter between the liquid and the gas.

As shown by the Examples hereinafter, the process according to the present invention also results in an excellent spray pattern. The spray pattern is of extreme importance to the contacting operation. An excessively collapsed spray does not mix well with the gas while an excessively wide spray pattern may result in direct impingement of the spray jets on the wall.

The risk of impingement of droplets of liquid to the confinement wall is minimized by choosing the Sauter mean drop diameter equal to or less than 200 μm. As shown in the Examples the process according to the invention did not give rise to liquid impingement and spray collapse.

The present invention can advantageously be applied in the SCOT (Shell Claus Off-Gas Treating) process. The SCOT Process involves heating a Claus tail gas stream to an elevated temperature along with a reducing gas comprising $H_2$ or a mixture of $H_2$ and CO. Claus tail gas typically contains $H_2S$, $SO_2$, $CO_2$, CO and $H_2$ with the remainder being mainly $N_2$. The said reducing gas may be supplied either from an outside source or from sub-stoichiometric combustion in an in-line burner. The combined gas stream is then passed into the top of a reactor containing a cobalt-molybdate on alumina catalyst. As the gases flow downward over the catalyst, the sulphur compounds, including $SO_2$, $CS_2$ and COS, are converted to $H_2S$. The gas is then cooled and the cooled gas is passed to an amine absorption column where the $H_2S$ is absorbed. The loaded absorbent is regenerated and the regenerated absorbent may be used again in the absorption column. The $H_2S$ liberated by the regeneration is recycled to the Claus unit.

An important aspect of the SCOT Process is the control of the temperature of the gases going to the reduction reactor. Typically, the desired temperature in the reactor is around 290°C. However, in certain circumstances where sub-stoichiometric combustion is used to generate the $H_2$, much higher temperatures are encountered. For example, temperatures of 475°C are often found in some units. It then becomes necessary to cool the gas stream prior to contact with the catalyst in the reactor. Previously, such streams were cooled by a pressurized water spray quench (employing standard commercial spray nozzles) directly in the relatively small (e.g. 96.5 cm) connecting lines between the furnace and the reactor. Typically, the first portion of the carbon steel connecting line is lined with refractory. To prevent damage to the refractory, impingement of the spray must be minimized. Further, all the spray must be evaporated within the refractory lined section to prevent corrosion of the exposed carbon steel segment of the line by the sour water formed during the quenching operation. Previous nozzles were not satisfactory in that a significant amount of the spray water reached the unlined pipe, therein presenting serious corrosion concerns.

The application of the present invention in the SCOT Process is ideally in the connecting line between the furnace and the reactor. The nozzle will typically be located in the line such that it is near the centre line of the connecting line. Typical compositions of the hot gaseous stream to be quenched and other typical operating conditions are disclosed in U.S. Patent Specification Nos. 4,153,674 and 4,001,386 and in Canadian Patent Specification No. 934,937, which disclosures are herein incorporated by reference. Typically, it is desired to quench the reactor feed stream from about 475°C to about 290°C.

The present invention may also be used to quench the hot gaseous overhead stream from a fluid catalytic cracking unit regenerator. Such streams comprise mainly CO, $CO_2$, $N_2$ and $H_2O$ and often have a temperature of 660°C or higher than 660°C. The present invention is useful in keeping the temperature under control and preventing the occurrence of afterburning. The general conditions of the regenerator in a catalytic cracking unit are described in U.S. Patent Specification Nos. 3,012,962 and 3,137,133 which are herein incorporated by reference.

The quench liquids contemplated in the present invention include water, hydrocarbon solvents and heavy hydrocarbons with water being particularly preferred. The atomizing gases include steam, air, $N_2$, $O_2$ and methane with steam being particularly preferred.

The pressure of the atomizing gases should be sufficient to create critical or near critical (0.7 critical) two phase velocities for the combined quench liquid-atomizing gas at the exit ports. When steam is employed, the temperature of the steam should be high enough so as to not cause excessive condensation in the mix chamber or passages. Atomizing gas pressures for steam used in the SCOT Process are typically about 16.5 bar.

The weight ratio of liquid to atomizing gas is preferably in the range of from 2:1 to 6:1.

In most cases the nozzle assembly is cylindrical in shape, and the passages are also typically straight, cylindrical passages. In a preferred embodiment, a plug or similar device is employed to mix the liquid and atomizing gas in the assembly.

The number of exit ports (and passages) are usually chosen first (assuming about 6 to 12 for each nozzle). The size of the ports depends then upon the amount of cooling required, and hence the amount of quench liquid and atomizing gas required.

In order to prevent liquid impingement on the confinement wall of the contact chamber and to prevent spray collapse a number of requirements have to be fulfilled.

A first requirement for preventing liquid impingement to the confinement wall of the contact chamber consists herein that the individual droplets in the sprays should have such a size that they do not follow individual trajectories, but remain in the spray jets. Thereto, the Sauter mean diameter of the droplets leaving the exit ports should be not more than 200 μm. Sauter mean diameter (SMD) is defined thus:

$$ SMD = \frac{\sum_{i=1}^{n} (N_i D_i^3)}{\sum_{i=1}^{n} (N_i D_i^2)} \tag{1}$$

in which $N_i$ is the number of droplets in the diameter range $D_i$.

The design of the nozzle assembly is preferably such that the SMD of the droplets is not more than 100 μm. Typical sizes for the droplet diameters are 200 to 40 μm and preferably 125 to 50 μm. In a preferred embodiment for the SCOT Process, the SMD is between 80 μm and 40 μm.

Sauter mean diameter can be estimated from the following formula:

$$ \frac{SMD}{d_e} = 0.46 \left\{ \left( \frac{\sigma}{d_e G''} \right) \left( \frac{\dot{m}_l}{\dot{m}_g} \right) \left( \frac{P_{mix}}{P_g} \right) \right\}^{0.38} \tag{2}$$

The various terms employed hereinbefore are defined as follows:

$\dot{m}_l$ liquid mass flow, per exit port

$\dot{m}_g$ atomizing gas mass flow, per exit port

$P_g$ atomizing gas supply mixture

$\dot{G}''$ momentum flux $2\left( \dfrac{2}{K+1} \right)^{1/(K-1)} \cdot P_{mix} - P_a$, expressed in $N/m^2$.

$\dot{G}$ momentum flow $\dot{G}''$ times $a_n$, $a_n$ being the cross sectional area of each exit port, expressed in N

K ratio of specific heats, $\dfrac{C_p}{C_v} = 1.40$ for air

$P_{mix}$ internal mixing chamber pressure

$P_a$ pressure of ambient gas

$d_e$ equivalent nozzle diameter, $\sqrt{4 \dfrac{(\dot{m}_l + \dot{m}_g)^2}{\pi \rho_a \cdot \dot{G}}}$, expressed in m.

$\sigma$ surface tension in N/m

$\rho_a$ density of ambient gas

The angle of the passages depends in large part upon the particular size of the contact chamber and the velocity of the gas to be contacted with the liquid. The larger the diameter of the contact chamber, the greater the angle can be without experiencing any impingement on the sides or wall of the contact chamber. Further, the greater the velocity of the gas, the greater the angle can be.

As a second requirement for preventing liquid impingement on the confinement wall of the contact chamber, the ratio

$$ \frac{x_i}{R} $$

should be equal to or larger than a certain minimum value, hereinafter to be discussed.

$$\frac{x_i}{R}$$

can be estimated from the following formula:—

$$\frac{x_i}{R} = \frac{0.14\rho_a \cdot V_a^2 \pi R^2}{\dot{G}(\sin \alpha)^2} + \text{cotg } \alpha. \tag{3}$$

in which $\rho_a$, $R$, $\alpha$ and $\dot{G}$ are defined as stated hereinbefore and $V_a$ is the velocity of the ambient gas.

From tests carried out it has been found that spray impingement onto the confinement wall of the contact chamber is prevented if the ratio

$$\frac{x_i}{R}$$

is chosen equal to or greater than 2.75. This requirement can be easily deduced from the Examples shown hereinafter.

At a given density of ambient gas and a given atomizer assembly, the ratio

$$\frac{x_i}{R}$$

can be influenced by varying the ambient gas velocity. An increase of the ambient gas velocity will result in a decrease of the rate of spreading outwardly of the sprays from the exit ports, thereby reducing the risk of spray impingement of the confinement wall of the atomizer assembly.

Apart from liquid impingement, there is a further important cause for malfunction of the contacting operations in question, viz. spray collapse. An excessively collapsed spray does not mix well with the gas to be contacted, for example, with a hot gas to be cooled. This adversely affects the rate of cooling obtained. Spray collapse can be caused by an incorrect design of the mix atomizer, or an incorrect contacting operation with a correct mix atomizer. Spray collapse due to the mix atomizer design, can occur when the atomizer is provided with two many exit ports and/or when the angles of the interior passages and exit ports with the axis of the atomizer assembly are chosen too small.

Spray collapse due to a wrong design of the atomizer is prevented if the ratio $N/\sin \alpha$, defined hereinbefore, is chosen not more than 15.6. The angle $\alpha$ of the exit ports with the axis of the atomizer assembly is preferably in the range of from 35 degrees to 50 degrees. The number of exit ports is suitably chosen in the range of from 6 to 10. A lower number of exit ports results in a less effective use of the area available for liquid/gas contact in the contact chamber. When the number of exit ports is larger than 10, the risk of spray collapse is relatively high, whereas hardly any improvement of the use of the available liquid/gas contact area is achieved.

Spray collapse can also occur if the ambient gas pushes the jet sprays from the exit ports towards the axis of the atomizer assembly, which in the most extreme case can result in a merging of the jet sprays into a single jet. When this occurs, only a very minor part of the ambient gas is contacted with the liquid from the exit ports. To prevent spray collapse of the last-mentioned type, the ratio

$$\frac{x_i}{R}$$

should be chosen equal to or less than 5.65. The ratio

$$\frac{x_i}{R}$$

is estimated in the same manner as discussed hereinbefore with respect to the phenomenon of liquid impingement to the confinement wall of the contact chamber.

With all the above considerations in mind, it is possible to design an atomizing nozzle assembly that will not impinge on the wall of the contact chamber and which will provide droplets of a controlled size that will vaporize within the desired portion of the contact chamber.

In order to describe the invention more fully, reference is made to the accompanying drawings, wherein

Figure 1 illustrates a longitudinal section (taken along line 1—1 of Figure 2) of an internal mix-type fluid atomizing nozzle assembly used in the process according to the invention;

Figure 2 is a top view of the same nozzle;

Figure 3 is a schematic representation of a contact chamber with atomizer according to the invention, and

Figure 4 is a graphical representation of test results.

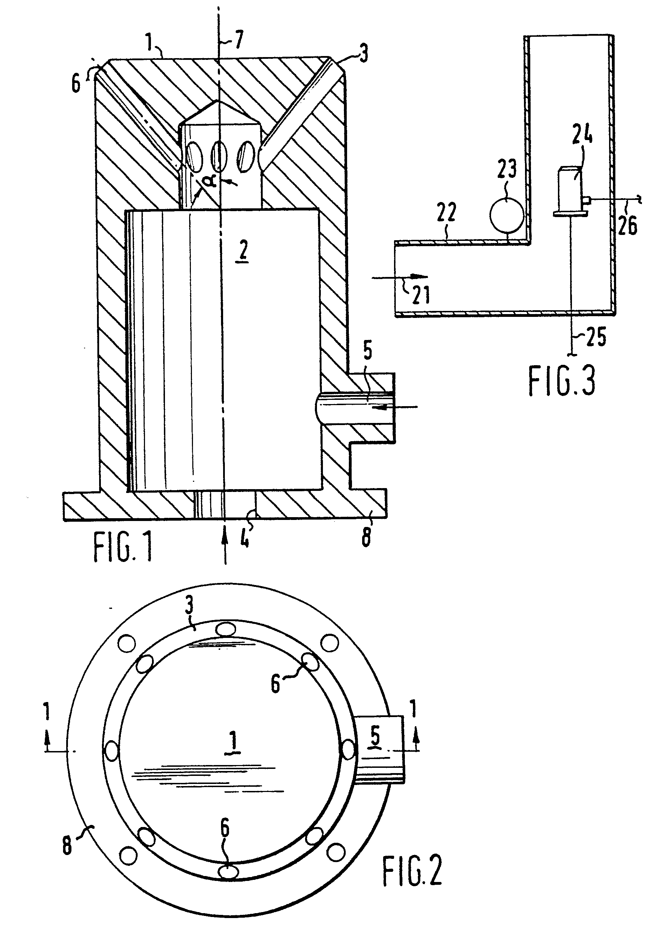

Figures 1 and 2 show an internal mix atomizer used according to the invention and comprising a member 1 provided with a mixing chamber 2 communicating with a plurality of passages 3, preferably cylindrically shaped. Member 1 is provided with openings 4 and 5 for introducing atomizing gas and liquid, respectively, into chamber 2. The passages 3 are positioned in member 1 in accordance with the principles described herein, that is the angle α of the passages 3 to the axis (7—7) is suitably between 30° and 75°. The exit or terminal ports 6 debouch into a contact chamber (not shown).

The nozzle assembly may be anchored to the contact chamber with use of a flange connection 8.

For cooling a gas with atomized liquid, a quench liquid is introduced at the opening 5 and an atomizing gas is introduced at the opening 4 under pressure into the mixing chamber 2 via a source, such as a supply tube or tubes (not shown). The mixed fluids are forced through the passages 3, and through the exit ports 6 where they expand because of reduction in pressure. Exit ports 6 are preferably circular in shape, and are preferably, as shown, at an angle to the exterior surfaces of member 1. In general, the exit ports are spaced around the periphery of the atomizer at a location somewhat disposed from the liquid supply-fluid supply opening. For example, if the atomizer is generally cylindrical, as illustrated in the embodiment of the drawing, the exit ports may be spaced, in accordance with the relationship described herein, in the side of a frustoconical section whose smaller base is the "base" of the "cylinder" opposite the liquid-fluid supply opening of the atomizer, the side of the frustoconical section terminating at the "cylinder" sides or wall.

The invention will be further illustrated by means of the following Examples.

Examples

Various experiments were performed to simulate operating conditions (except for temperature) in a SCOT Process unit Reference is made to Figure 3, which schematically shows the equipment employed in the experiments. Instead of a hot gaseous reactant stream, ambient air was employed. The air (21) was provided by an air blower (not shown). The air was injected into a metal duct assembly (22) having a 1.83 m radius miter elbow. The duct assembly (contact chamber) had a 0.96 m inside diameter. The flow of ambient air was measured by a flow indicator (23) and is reported in the Table as $V_a$ (m/s). The various nozzle assemblies (24) were inserted downstream of the elbow. An atomizing air supply (25) and quench water supply (26) were also provided.

The operating conditions and results are presented below in the Table. The various nozzles are described by the angle of the nozzle passages to the axis of the atomizer and the number of exit ports. Accordingly, the designation 40°—10 refers to a nozzle assembly having a small mixing chamber, 10 exit ports and an angle of 40° for the passages. The relative amounts of the quench water supply, atomizing air supply and ambient air velocity were varied. $P_l$ is defined as the liquid quench water supply pressure. The surface tension σ is 0.072 N/m.

6

| Run | Nozzle | $\dot{m}_g$ (kg/s) | $P_g$ (bar) | $\dot{m}_l$ (kg/s) | $P_l$ (bar) | $V_a$ (m/s) | $\dot{G}$ (N) | $a_n$ ($m^2 \times 10^{-4}$) | N/sin α | $\rho_a$ (kg/m³) | $x_i/R$ | Notes |
|---|---|---|---|---|---|---|---|---|---|---|---|---|
| 1 | 40°-10[1] | 0.2319 | 16.6 | 0.6364 | 12.2 | 12.5 | 23.3 | 0.1967 | 15.56 | 1.28 | 3.46 | No Impingement, no collapse |
| 2 | 40°-10[1] | 0.2319 | 16.5 | 0.6364 | 12.4 | 7.0 | 23.8 | 0.1967 | 15.56 | 1.28 | 1.99 | No Impingement, no collapse |
| 3 | 40°-10[1] | 0.1297 | 9.15 | 0.2897 | 5.5 | 6.7 | 10.3 | 0.1967 | 15.56 | 1.28 | 2.71 | No Impingement, no collapse |
| 4 | 40°-10[1] | 0.1297 | 8.94 | 0.2897 | 5.5 | 12.8 | 10.3 | 0.1967 | 15.56 | 1.28 | 6.38 | No Impingement, no collapse |
| 5 | 40°-9 | 0.1297 | 9.01 | 0.2897 | 5.4 | 12.8 | 11.2 | 0.2192 | 14.00 | 1.28 | 5.97 | No impingement, no collapse |
| 6 | 40°-9 | 0.1297 | 9.01 | 0.2961 | 5.8 | 6.4 | 12.4 | 0.2192 | 14.00 | 1.28 | 2.37 | Impingement to confinement wall; jets pulled off wall at $V_a$=9.1 m/s |
| 7 | 40°-9 | 0.2319 | 16.6 | 0.6364 | 12.4 | 11.9 | 26.6 | 0.2192 | 14.00 | 1.28 | 2.63 | Impingement to confinement wall; no jet impingement |
| 8 | 40°-9 | 0.2319 | 16.6 | 0.6364 | 12.4 | 7.6 | 26.6 | 0.2192 | 14.00 | 1.28 | 2.03 | Impingement to confinement wall; no impingement and no collapse at $V_a$=10.36 m/s, $x_i/R$=2.61 |
| 9 | 40°-8 | 0.1347 | 9.43 | 0.2836 | 5.8 | 12.5 | 13.9 | 0.2452 | 12.45 | 1.28 | 4.88 | No impingement, no collapse |
| 10 | 40°-8 | 0.1347 | 9.43 | 0.2836 | 5.8 | 7.31 | 13.9 | 0.2452 | 12.45 | 1.28 | 2.53 | Impingement to confinement wall |
| 11 | 40°-8 | 0.2281 | 16.6 | 0.6364 | 12.7 | 12.2 | 30.8 | 0.2452 | 12.45 | 1.28 | 2.84 | Impingement to confinement wall |
| 12 | 40°-8 | 0.2281 | 16.6 | 0.6364 | 12.7 | 23.2 | 18.2 | 0.2452 | 12.45 | 0.65 | 5.85 | Spray collapse |
| 13 | 35°-10 | 0.2319 | 16.3 | 0.6364 | 13.8 | 12.8 | 27.3 | 0.1967 | 17.54 | 1.28 | 3.98 | Spray collapse |
| 14 | 35°-10 | 0.2106 | 16.0 | 0.6552 | 12.0 | 7.3 | 17.9 | 0.1967 | 17.54 | 1.28 | 2.78 | Spray collapse |
| 15 | 35°-10 | 0.1347 | 9.43 | 0.2961 | 5.7 | 7.0 | 8.41 | 0.1967 | 17.54 | 1.28 | 3.93 | Spray collapse |
| 16 | 35°-10 | 0.1347 | 9.43 | 0.2961 | 5.7 | 12.5 | 8.41 | 0.1967 | 17.54 | 1.28 | 8.98 | Spray collapse |
| 17 | 50°-10 | 0.1311 | 9.29 | 0.2961 | 5.7 | 11.9 | 10.9 | 0.2007 | 12.99 | 1.28 | 3.82 | No impingement, no collapse |
| 18 | 50°-10 | 0.1311 | 9.15 | 0.3150 | 5.7 | 7.3 | 10.8 | 0.2007 | 12.99 | 1.28 | 2.02 | Impingement to confinement wall; Jets pulled off wall at $V_a$=8.5 m/s |
| 19 | 50°-10 | 0.2319 | 16.6 | 0.6175 | 12.4 | 12.8 | 24.6 | 0.2007 | 12.99 | 1.28 | 2.41 | Impingement to confinement wall |
| 20 | 50°-10 | 0.2267 | 16.0 | 0.6175 | 11.7 | 7.0 | 22.8 | 0.2007 | 12.99 | 1.28 | 1.40 | Impingement to confinement wall |
| 21 | 40°-10[2] | 0.1347 | 8.74 | 0.2772 | 5.8 | 8.23 | 11.1 | 0.1967 | 15.56 | 1.28 | 3.26 | No impingement, no collapse |
| 22 | 40°-10[2] | 0.1347 | 8.74 | 0.2772 | 5.8 | 5.48 | 11.1 | 0.1967 | 15.56 | 1.28 | 2.18 | Impingement to confinement wall |
| 23 | 45°-10 | 0.1347 | 8.74 | 0.2772 | 5.8 | 23.20 | 14.8 | 0.1967 | 14.14 | 0.65 | 5.70 | Spray collapse |

[1] Nozzle tip with 4° offset, so that during operation a slight amount of tangential momentum is added to the quenching liquid.

[2] Nozzle tip with holes perpendicular to face.

**0 085 445**

The Sauter mean drop diameter of the droplets was smaller than 200 μm for each run. As shown the spray nozzles used in the process according to the invention had excellent patterns. These good results were in a very difficult application, i.e., a refractory lined carbon steel line of only 0.96 m inside diameter, having only about 5.5 m of refractory lining available in the vertical section. The extreme cases show direct impingement of the spray jets on the duct wall for three of the four cases with the 50°-10 hole tip along with a collapsed spray with poor entrainment of the ambient gas with the 35°-10 hole tip. In many cases the spray jets could be "moved" on and off the wall of the duct by adjusting the air velocity in the duct between 4.6 and 9.2 m/s. The nozzles used according to the invention, i.e., the 40°-10 nozzle tip, were found to give a reasonably broad pattern and did not fan out to the wall until the duct air flow was reduced below about one half.

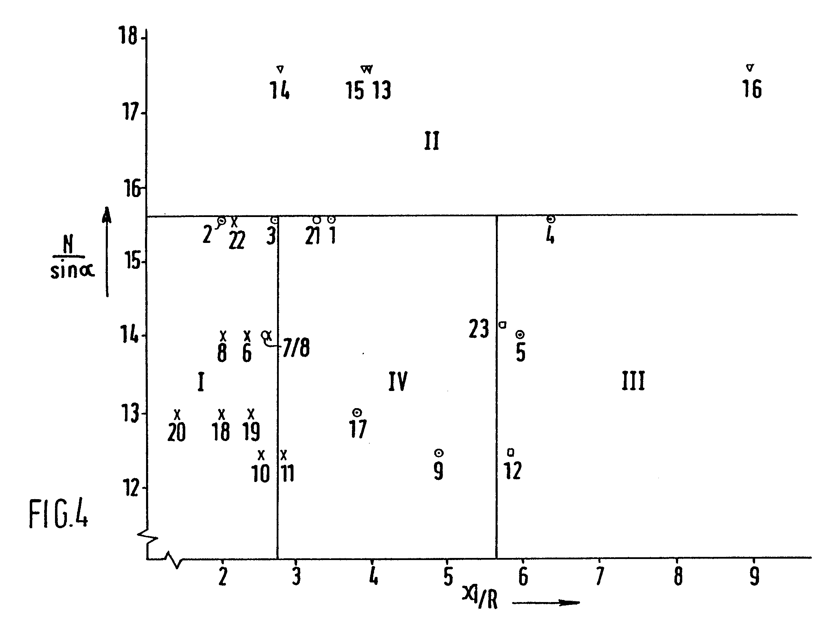

The test results mentioned in the table are graphically illustrated in Figure 4. In this Figure 4, the ratio $x_i/R$ has been plotted on the X-axis and the ratio $N/\sin \alpha$ on the Y-axis. The symbols used in this figure have the following meaning:—

○ no impingement, no collapse, with nozzles having interior passages perpendicular to the surface of the atomizer
● no impingement, no collapse, with nozzles having interior passages 4° off-set
△ impingement to confinement wall
▽ spray collapse due to nozzle design
□ spray collapse due to flow ambient gas

In Figure 4 four areas can be distinguished, viz.:— area I: spray impingement to confinement wall, area II: spray collapse due to nozzle design; area III: spray collapse due to influence ambient gas and area IV: no impingement, no collapse.

## Claims

1. A process for contacting a gas with atomized liquid, which process comprises injecting droplets of liquid into a contact chamber with a confinement wall and containing said gas, through an internal mix atomizer assembly comprising a member having an internal mixing chamber adapted to receive a liquid and an atomizing gas supply and having a plurality of interior passages each communicating, at one end thereof, with the internal mixing chamber, and each terminating at the other end thereof, as an exit port in the surface of the member, wherein the angle of said passages to the axis of said atomizer assembly is between 30° and 75°, the weight ratio of liquid to atomizing gas is between 1:1 and 7:1, and the Sauter mean drop diameter of the droplets entering said contact chamber at said exit ports is not more than 200 micrometres.

2. A process as claimed in claim 1, in which the process is applied for quenching a hot gaseous stream by contacting said stream with droplets of a quench liquid.

3. A process as claimed in claim 2, in which said quench liquid is water, wherein steam is used as an atomizing gas.

4. A process as claimed in claim 2 or 3, in which said hot gaseous stream comprises the hot regenerator overhead gas stream from a fluid catalytic cracking unit.

5. A process as claimed in claim 2 or 3, in which said hot gaseous stream comprises the feed stream to a reduction reactor in a Claus off-gas treating process.

6. A process as claimed in any one of the preceding claims, in which the exit ports are uniformly arranged in a circular fashion in the surface of said atomizer assembly.

7. A process as claimed in any one of the preceding claims, in which the droplets of liquid are injected into the contact chamber in a co-current direction with the gas, which is caused to flow through said contact chamber.

8. A process as claimed in any one of the preceding claims, in which the pression of the atomizing gas is such that the velocity of said droplets at the exit ports is critical or at least 0.7 times critical two phase velocity.

9. A process as claimed in any one of the preceding claims, in which the Sauter mean diameter is in the range of from 40 to 200 μm.

10. A process as claimed in any one of the preceding claims, in which the said passages are located in the atomizer so that the exit ports are positioned in relation to each other in such a manner that for each pair of adjacent exit ports the ratio

$$\frac{r_i(o)+r_j(o)}{t_{ij}},$$

wherein $r_i(o)$ and $r_j(o)$ are the jet radii directly after expansion of exit ports i and j, respectively, and $t_{ij}$ is the distance between the centre of exit port i and the centre of exit port j, is less than 0.8, in which assembly the ratio

8

# 0 085 445

N/sin α,

in which N is the number of exit ports of the assembly and α is the angle of the internal passages and exit ports to the axis of the assembly, is not more than 15.6, and the ratio

$$x_i/R,$$

in which $x_i$ is the downstream distance between an exit port i and the location at which the spray from said exit port impinges to the confinement wall when one exit port is used and R is the radius of the confinement wall, is in the range of from 2.75 to 5.65.

## Patentansprüche

1. Ein Verfahren zum Kontaktieren eines Gases mit einer atomisierten Flüssigkeit, welches Verfahren das Injizieren von Flüssigkeitströpfchen in eine Kontaktkammer, welche mit einer Begrenzungswand ausgestattet ist und das genannte Gas enthält, mittels einer innen angeordneten Mischungs-Zerstäuberanordnung enthaltend ein eine Mischungskammer, welche zur Aufnahme einer Flüssigkeit und eines Zerstäubergases angepaßt ist und eine Vielzahl von innen angeordneten Durchlaßkanälen, umfassendes Teil, deren jeder an einem Ende mit der interne schungskammer in Verbindung steht und am anderen Ende als Ausgangsöffnung in die Oberfläche des genannten Teils mündet, wobei der Winkel der genannten Durchlaßkanäle zur Achse der genannten Zerstäuberanordnung zwischen 30° und 75° beträgt, das Gewichtsverhältnis von Flüssigkeit zu Zerstäubergas im Bereich zwischen 1:1 und 7:1 liegt, und der mittlere Tropfendurchmesser nach Sauter der Tröpfchen, die an diesen Ausgangsöffnunge in die Kontaktkammer injiziert werden, nicht mehr als 200 μm beträgt.

2. Ein Verfahren wie in Anspruch 1 beansprucht, wobei das Verfahren zur Abkühlung eines Heißgasstromes durch Kontaktieren des Stromes mit Tröpfchen einer Abschreckflüsigkeit angewendet wird.

3. Ein Verfahren wie in Anspruch 2 beansprucht, in welchem die genannte Abschreckflüssigkeit Wasser ist, wobei als Zerstäubergas Wasserdampf verwendet wird.

4. Ein Verfahren wie in Anspruch 2 oder 3 beansprucht, in welchem der genannte Heißgasstrom ein heißen Regenerator-Overhead-Gasstrom aus einer Wirbelschicht-Crack-Einheit umfaßt.

5. Ein Verfahren wie in Anspruch 2 oder 3 beansprucht, bei welchem der genannte heiße Gasstrom den Versorgungsstrom zu einem Reduktionsreaktor in einem Behandlungsverfahren für Claus-abgase umfaßt.

6. Ein Verfahren wie in einem der vorstehenden Ansprüche beansprucht, in welchem die Ausgangsöffnungen gleichmäßig kreisförmig in der Oberfläche der genannten Zerstäuberanordnung angeordnet sind.

7. Ein Verfahren wie in einem der vorstehenden Ansprüche beansprucht, in welchem die Flüssigkeitströpfchen in die Kontaktkammer in der Strömungsrichtung des Gases, welches man durch die Kontaktkammer fließen läßt, injiziert werden.

8. Ein Verfahren wie in einem der vorstehenden Ansprüche beansprucht, bei welchem der Druck des Zerstäubergases so groß ist, daß die Geschwindigkeit der genannten Tröpfchen an den Ausgangsöffnungen kritisch ist oder zumindest sich zu 7/10 an die kritische 2-Phasen-Geschwindigkeit annähert.

9. Ein Verfahren wie in einem der vorstehenden Ansprüche beansprucht, in welchem der mittlere Durchmesser nach Sauter im Bereich von 40 bis 200 μm liegt.

10. Ein Verfahren wie in einem vorstehenden Ansprüche beansprucht, bei welchem die genannten Durchlaßkanäle derart im Zerstäuber angeordnet sind, daß die Ausgangsöffnungen so zueinander liegen, daß für jedes Paar nebeneinanderliegender Ausgangsöffnungen das Verhältnis

$$\frac{r_i(o)+r_j(o)}{t_{ij}}$$

wobei $r_i(o)$ und $r_j(o)$ die Strahlradien unmittelbar nach Ausdehnung der Ausgangsöffnungen i und j darstellen, und $t_{ij}$ der Abstand zwischen dem Zentrum der Ausgangsöffnung i und dem Zentrum der Ausgangsöffnung j ist, weniger als 0,8 beträgt, bei welchem in der Zerstäuberanordnung das Verhältnis

N/sin α,

wobei N die Anzahl der Ausgangsöffnungen der Zerstäuberanordnung wiedergibt und α der Winkel der internen Durchlaßkanäle und Ausgangsöffnungen zur Achse der Zerstäuberanordnung ist, nicht mehr als 15,6 beträgt, und das Verhältnis

$$x_i/R$$

wobei $x_i$ der Abstand stromabwärts zwischen einer Ausgangsöffnung i und der Stelle ist, an welcher der Sprühstrahl, bei Verwendung einer Ausgangsöffnung, aus der genannten Ausgangsöffnung auf die

9

Begrenzungswand auftrifft, und R der Radius der Begrenzungswand ist, im Bereich zwischen 2,75 und 5,65 liegt.

**Revendications**

1. Procédé pour mettre en contact un gaz avec un liquide atomisé, dans lequel procédé on injecte des gouttelettes de liquide dans une chambre de contact avec une paroi de confinement et contenant ledit gaz, à travers un assemblage d'atomiseurs à mélange interne, comprenant une pièce ayant une chambre de mélange interne adaptée pour recevoir un liquide et une alimentation en gaz atomisant et ayant plusieurs passages intérieurs communiquant, chacun à une de ses extrémités, avec la chambre de mélange interne, et se terminant chacun à son autre extrémité, sous la forme d'une orifice d'échappement dans la surface de la pièce, où l'angle desdits passages par rapport à l'axe dudit assemblage d'atomiseurs est compris entre 30 et 75°, le rapport pondéral du liquide au gaz atomisant est entre 1:1 et 7:1, et le Diamètre Moyen de Sauter des gouttelettes pénétrant dans ladite chambre de contact auxdits orifices d'échappement n'est pas supérieur à 200 µm.

2. Procédé selon la revendication 1, où l'on applique le procédé pour éteindre un courant gazeux chaud en mettant en contact ledit courant avec des gouttelettes d'un liquide de trempage.

3. Procédé selon la revendication 2, où ledit liquide de trempage est de l'eau, où l'on utilise de la vapeur comme gaz atomisant.

4. Procédé selon les revendications 2 ou 3, où ledit courant gazeux chaud comprend le courant de gaz de tête du régénérateur chaud provenant d'une unité de craquage catalytique de fluide.

5. Procédé selon les revendications 2 ou 3, où ledit courant gazeux chaud comprend le courant de charge dans un réacteur de réduction dans un procédé de traitement de gaz de dégagement de Claus.

6. Procédé selon l'une quelconque des revendications précédentes, où les orifices d'échappement sont uniformément disposés de manière circulaire dans la surface dudit assemblage d'atomiseurs.

7. Procédé selon l'une quelconque des revendications précédentes, où les gouttelettes de liquide sont injectées dans la chambre de contact dans une direction parallèle à celle du gaz que l'on fait passer à travers ladite chambre de contact.

8. Procédé selon l'une quelconque des revendications précédentes, où la pression du gaz atomisant est telle que la vitesse desdites gouttelettes aux orifices d'échappement est critique ou est d'au moins 0,7 fois la vitesse critique des deux phases.

9. Procédé selon l'une quelconque des revendications précédentes, où le Diamètre Moyen de Sauter est dans un intervalle allant de 40 à 200 µm.

10. Procédé selon l'une quelconque des revendications précédents, où lesdits passages sont situés dans l'atomiseur de manière telle que les orifices d'échappement soient disposés en relation les uns avec les autres, de manière que pour chaque paire d'orifices d'échappement adjacents le rapport

$$\frac{r_i(o) + r_j(o)}{t_{ij}}$$

où $r_i(o)$ et $r_j(o)$ sont les rayons des jets directement après la dilatation des orifices d'échappement i et j, respectivement, et $t_{ij}$ est la distance entre le centre de l'orifice d'échappement i et le centre de l'orifice d'échappement j, est inférieur à 0,8, dans lequel assemblage le rapport

$$N/\sin \alpha,$$

où N est le nombre d'orifices d'échappement de l'assemblage et $\alpha$ est l'angle des passages internes et des orifices d'échappement par rapport à l'axe de l'assemblage, n'est pas supérieur à 15,6, et le rapport

$$x_i/R,$$

où $x_i$ est la distance en aval entre un orifice d'échappement i et l'endroit auquel les embruns provenant dudit orifice d'échappement produisent un choc sur la paroi de confinement lorsqu'on utilise un orifice d'échappement et R est le rayon de la paroi de confinement, est dans un intervalle allant de 2,75 à 5,65.

FIG.1

FIG.2

FIG.3

FIG.4

0 085 445